# EUROPÄISCHE PATENTSCHRIFT

(11) **EP 2 327 346 B1**
(45) Veröffentlichungstag und Bekanntmachung des Hinweises auf die Patenterteilung: **21.10.2015**
(21) Anmeldenummer: 10014475.7
(22) Anmeldetag: 11.11.2010
(51) Int. Cl.: A47L 9/24, B65G 53/52

(54) **Gewendelter Saugschlauch**
Coiled vacuum hose
Tuyau d'aspiration spiralé

(30) Priorität: 30.11.2009 DE 202009016596 U
(43) Veröffentlichungstag der Anmeldung: 01.06.2011
(73) Patentinhaber: ELECTROSTAR GmbH, 73262 Reichenbach/Fils (DE)
(72) Erfinder: Bruntner, Eugen, 73278 Schlierbach (DE)
(74) Vertreter: Jackisch-Kohl, Anna-Katharina

(56) Entgegenhaltungen:
- EP-A1- 0 252 338
- WO-A1-98/25064
- JP-A- 3 295 526
- US-A- 4 870 535

## Beschreibung

Die Erfindung betrifft einen gewendelten Saugschlauch nach dem Oberbegriff des Anspruches 1.

Saugschläuche werden für Staubsauger eingesetzt und bestehen üblicherweise aus Kunststoff, vorzugsweise aus Polyethylen. Wird mit den Staubsaugern feiner Staub aufgesaugt, führt dies zu einer starken statischen Aufladung des Saugschlauches. Wird er von Menschen berührt, erhalten sie infolge der Entladung einen teilweise sehr schmerzhaften Schlag. Die Entladung kann so stark sein, dass Herzschrittmacher stehen bleiben.

Aus diesem Grunde sind Saugschläuche bekannt, die aus hochohmig elektrisch leitendem Material bestehen. Diese Saugschläuche werden aus Polyethylen hergestellt, in die feine Rußpartikel eingebettet sind. Der gesamte Saugschlauch bildet somit gleichzeitig auch einen elektrischen Leiter, mit dem die elektrostatische Ladung gefahrlos abgeleitet wird. Dieses Material für den Saugschlauch ist teuer. Die Rußpartikel haben den Nachteil, dass sie zu Abriebspuren führen, wenn der Saugschlauch mit seinem Wendelsteg über den Untergrund gezogen wird. Aus diesem Grunde wird auf den wendelförmig verlaufenden Steg eine Abdeckschicht aufgebracht, um diesen Abrieb zu verhindern. Die zusätzliche Schutzschicht führt zu einer weiteren Verteuerung des Saugschlauches.

Bei einem bekannten gewendelten Saugschlauch (EP 0 252 338 A1) ist zur Ableitung von elektrostatischer Ladung ein elektrischer Leiter vorgesehen. Er erstreckt sich im Wesentlichen über die Wendellänge des Saugschlauches und hat eine Breite, die höchstens gleich der Gangbreite des Saugschlauches ist. Der Saugschlauch hat eine Ummantelung, die ein wendelförmig verlaufendes Versteifungselement umgibt. Der elektrische Leiter ist entweder in die Ummantelung eingebettet oder mit einer eigenen PVC-Ummantelung versehen. Die Herstellung eines solchen Saugschlauches ist aufwändig und dementsprechend teuer, weil zur Versteifung des Saugschlauches ein in die Ummantelung eingebettetes gesondertes Versteifungselement notwendig ist. Der elektrische Leiter muss darüber hinaus ebenfalls in die Ummantelung eingebettet werden, was zu einem erhöhten herstellungstechnischen Aufwand führt. Bei einer anderen Variante dieses Saugschlauches muss der elektrische Leiter selbst in eine PVC-Ummantelung eingebettet werden, bevor er auf den Schlauch aufgebracht wird. Der Leiter wird dann auf den Schlauch aufgebracht, wenn dessen Ummantelung noch plastisch ist. Wenn die Ummantelung erkaltet, verbindet sich die Ummantelung mit der PVC-Ummantelung des Leiters.

Ausgehend von diesem Stand der Technik liegt der Erfindung die Aufgabe zugrunde, den gattungsgemäßen Saugschlauch so auszubilden, dass er ohne Beeinträchtigung der statischen Ableitung kostengünstig gefertigt werden kann.

Diese Aufgabe wird beim gattungsgemäßen Saugschlauch erfindungsgemäß mit den kennzeichnenden Merkmalen des neuen Anspruches 1 gelöst.

Beim erfindungsgemäßen Saugschlauch bildet der elektrische Leiter nur noch einen Bruchteil des Materials des Saugschlauches. Die Breite des elektrischen Leiters ist höchstens gleich der Gangbreite des Saugschlauches. Der Saugschlauch kann aus kostengünstigem Kunststoff, beispielsweise Polyethylen hergestellt werden. Lediglich der elektrische Leiter muss aus einem Material gefertigt werden, das die elektrostatische Ableitung gewährleistet. Für diesen Leiter ist nur wenig Material erforderlich. Dadurch lässt sich der erfindungsgemäße Saugschlauch äußerst preisgünstig fertigen. Der Saugschlauch wird aus einem profilierten Schlauchabschnitt gebildet, der einen im Querschnitt ebenen Steg aufweist. Sein eines Ende ist rechtwinklig nach außen gebogen, und sein anderes Ende ist U-förmig ausgebildet und radial nach außen gebogen. Das eine, nach außen gebogene Ende greift beim Wickelvorgang in das U-förmige Ende ein. Die beiden Enden werden mediumsdicht miteinander verbunden. Dies ist einfach möglich, weil die Querschnittsbreite des U-förmigen Endes im Wesentlichen der Dicke des anderen Endes entspricht. Zwischen dem einen Ende und einem Bogen des U-Förmigen Endes wird ein Aufnahmeraum gebildet, auf dessen Steg der elektrische Leiter befestigt ist.

Da der Boden des Wendelganges von den wendelförmig verlaufenden Wendelstegen seitlich begrenzt ist, liegt der Boden des Wendelganges vertieft. Dies hat den Vorteil, dass auch der elektrische Leiter geschützt am Saugschlauch untergebracht werden kann und eine zusätzliche Schutzschicht für ihn nicht erforderlich ist. Dabei kann der elektrische Leiter einfach auf Fehler überprüft werden.

Vorteilhaft ist das Mengenverhältnis von Material des Saugschlauches zum Material des elektrischen Leiters kleiner als etwa 90 zu 10. Dadurch ist für den elektrischen Leiter nur eine sehr geringe Materialmenge, erforderlich, während der weitaus größte Materialanteil durch das Material des Saugschlauches gebildet wird. Der Saugschlauch lässt sich somit aus jedem für den vorgesehenen Einsatzzweck günstigsten Kunststoff oder anderem Werkstoff herstellen. Für den elektrischen Leiter, der zur Ableitung der elektrostatischen Ladung benötigt wird, kann das zweckmäßigste leitfähige Material eingesetzt werden. Da es jedoch nur einen Bruchteil der Materialmenge des Saugschlauches ausmacht, können die Herstellkosten für den Saugschlauch sehr gering gehalten werden.

Als elektrischer Leiter kann vorteilhaft ein elektrisch leitendes Band eingesetzt werden.

Dieses Band kann als Klebeband ausgebildet sein, das sich einfach am Saugschlauch befestigen lässt. Vorteilhaft wird ein solches elektrisch leitendes Band zwischen den Wendelstegen am Boden des Wendelganges befestigt.

Der elektrische Leiter kann auch durch eine Rußschicht gebildet sein. Sie lässt sich problemlos an der Außen- und/oder an der Innenseite des Saugschlauches anbringen.

Weiter ist es möglich, den elektrischen Leiter durch in Kunststoff, vorzugsweise Polyethylen, fein verteilt angeordnete Rußpartikel zu bilden. Ein solcher elektrischer Leiter lässt sich nach Art einer Raupe einfach auf der Außenseite des Saugschlauches anbringen. Eine solche Raupe kann auf dem Boden des Wendelganges und/oder auf dem Wendelsteg vorsehen. Weitere Merkmale der Erfindung ergeben sich aus den weiteren Ansprüchen, der Beschreibung und den Zeichnungen.

Die Erfindung wird nachstehend anhand einiger in den Zeichnungen dargestellter Ausführungsformen näher erläutert. Es zeigen
- Fig. 1: in einem Axialschnitt einen Teil eines zur Erfindung gehörenden Saugschlauches,
- Fig. 2: in vergrößerter Darstellung einen Fügebereich zwischen zwei Rändern eines wendelförmig verlaufenden, den Saugschlauch gemäß Fig. 1 bildenden Schlauchabschnittes,
- Fig. 3: in einer Darstellung entsprechend Fig. 1 einen erfindungsgemäßen Saugschlauch,
- Fig. 4: in vergrößerter Darstellung einen Fügebereich zwischen zwei Rändern eines wendelförmig verlaufenden, den Saugschlauch gemäß Fig. 3 bildenden Schlauchabschnittes,
- Fig. 5 bis Fig. 10: jeweils in einer Darstellung entsprechend den Fig. 1 und 2 weitere Ausführungsformen von nicht zur Erfindung gehörenden Saugschläuchen.

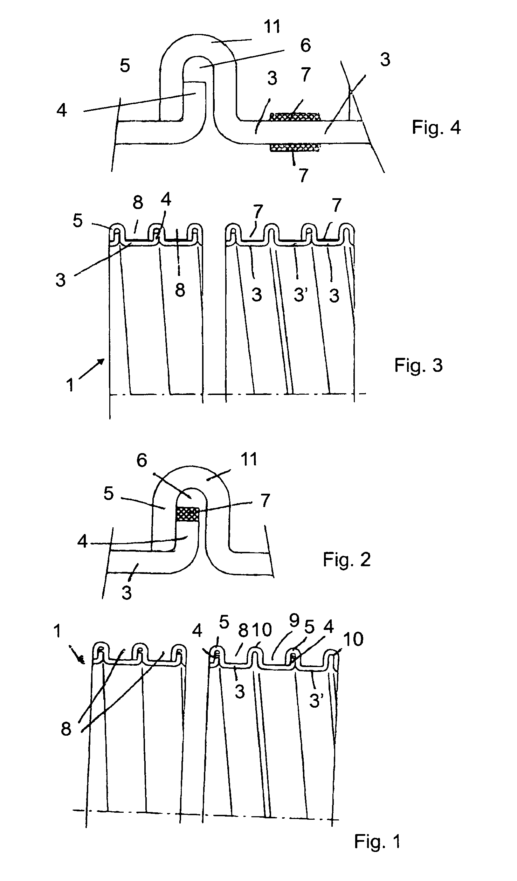

Der Saugschlauch wird bei Staubsaugern, insbesondere bei Industrie-Staubsaugern, eingesetzt und ist ein gewendelter Schlauch, der aus einem profilierten Schlauchabschnitt 1 gebildet wird. Er hat beim Ausführungsbeispiel nach Fig. 1 einen im Querschnitt ebenen Steg 3, dessen eines Ende 4 rechtwinklig nach außen gebogen ist. Das andere Ende 5 des Schlauchabschnittes 1 ist ebenfalls nach außen gebogen und hat U-Form. Der Schlauchabschnitt 1 wird so gewickelt, dass das Ende 4 in das U-förmige Ende 5 eingreift. Die Querschnittsbreite des U-förmigen Endes 5 entspricht im Wesentlichen der Dicke des geraden Endes 4. Dadurch ist eine einwandfreie dichte Verbindung zwischen den beiden Enden 4, 5 in einfacher Weise möglich. Die beiden Enden 4, 5 können beispielsweise miteinander verschweißt oder verklebt werden. Sie bilden einen Wendelsteg des Saugschlauches.

Das Ende 4 hat eine solche Länge, dass zwischen ihm und dem Bogen 11 (Fig. 2) des U-förmigen Endes 5 ein Aufnahmeraum 6 gebildet wird, in dem wenigstens ein elektrischer Leiter 7 untergebracht werden kann. Er hat die Aufgabe, elektrische Aufladungen des Schlauches abzuleiten. Der elektrische Leiter 7 verläuft über die Länge des Schlauches wendelförmig und ist so an den Staubsauger angeschlossen, dass beim Saugen entstehende elektrische Aufladungen gefahrlos abgeleitet werden.

Der elektrische Leiter 7 kann beispielhaft eine Kunststoffschicht sein, die mit Rußpartikeln versetzt ist. Ein solcher elektrischer Leiter 7 kann gleichzeitig beim Wickeln des Schlauchabschnittes 1 in den Aufnahmeraum 6 eingebracht werden. Dadurch lässt sich der Schlauch in einem Verfahrenszug zusammen mit dem elektrischen Leiter 7 herstellen.

Anstelle der gleichmäßig im Kunststoff verteilten Rußpartikel als elektrisch leitendes Material können beispielsweise auch Aluminiumpartikel, Metalloxidpartikel und dergleichen in einen entsprechenden Kunststoff eingebettet werden, der im Aufnahmeraum 6 vorgesehen wird.

Der Schlauchabschnitt 1 kann aus den für Saugschläuche geeigneten Kunststoffen hergestellt werden, beispielsweise aus Polyethylen. Der elektrische Leiter 7 ist geschützt im wendelförmigen Aufnahmeraum 6 untergebracht. Dadurch besteht nicht die Gefahr, dass er beim Gebrauch des Saugschlauches beschädigt oder verschlissen wird. Dadurch ist über die Lebensdauer des Saugschlauches eine zuverlässige Ableitung der elektrischen Ladung vom Saugschlauch gewährleistet.

Anstelle der in Kunststoff eingebetteten elektrisch leitenden Partikel kann als elektrischer Leiter 7 auch ein metallischer Draht verwendet werden, der im Aufnahmeraum 6 untergebracht ist. Ein solcher Draht lässt sich ebenfalls während des Wickelns des Schlauchabschnittes 1 in den Aufnahmeraum 6 in einem Verfahrensschritt einbringen. Ein solcher metallischer Draht als elektrischer Leiter 7 hat nur eine geringe Dicke, beispielsweise von nur etwa 0, 3 bis 0,4 mm. Als metallischer Draht kann beispielsweise ein Kupferdraht, ein Messingdraht und dergleichen eingesetzt werden. Aufgrund der geringen Drahtstärke beeinträchtigt der elektrische Leiter 7 die Flexibilität des Saugschlauches nicht. Zudem ist ein solcher metallischer Draht kostengünstig in der Herstellung und lässt sich insbesondere bei der Montage des Saugschlauches problemlos im Aufnahmeraum 6 während des Wickelvorganges des Schlauchabschnittes 1 unterbringen.

Der in Fig. 1 dargestellte Saugschlauch ist durch eine eingängige Wendel gebildet, das heißt, der Saugschlauch hat einen Wendelgang 8. Fig. 1 zeigt in der rechten Darstellung die Möglichkeit, den Saugschlauch zweigängig auszubilden. In diesem Falle hat der Schlauch zwei wendelförmige Gänge 8, 9. Der Saugschlauch kann auch mehr als zweigängig ausgebildet sein. Bei dieser Ausführungsform hat der Schlauchabschnitt im Querschnitt das gerade Ende 4 sowie das U-förmige Ende 5. Zwischen beiden Enden befindet sich in halber Breite ein U-förmiges Profilstück 10, das die beiden ebenen Stege 3, 3' miteinander verbindet, mit denen das Profilstück 10 mit dem U-förmigen Ende 5 und dem geraden Ende 4 verbunden ist. Die beiden Gänge 8, 9 werden durch das U-förmige Ende 5 und das Profilstück 10 bzw. durch das Profilstück 10 und das gerade Ende 4 begrenzt. Das Profilstück 10 ragt gleich weit nach außen wie das U-förmige Ende 5. Das gerade Ende 4 greift in das U-förmige Ende 5 ein. Das Profilstück 10 und die ineinander greifenden Ränder 4, 5 bilden somit zwei Wendelstege des Saugschlauches.

Zwischen dem geraden Ende 4 und dem Bogen 11 des U-förmigen Endes 5 wird der Aufnahmeraum 6 gebildet, in dem sich der elektrische Leiter 7 befindet.

In den Fig. 3, 5, 7 und 9 sind entsprechend Fig. 1 eingängige (jeweils linke Darstellung) und zweigängige (jeweils rechte Darstellung) Ausführungen dargestellt.

Fig. 3 zeigt einen Saugschlauch, der im Wesentlichen gleich ausgebildet ist wie der Saugschlauch gemäß Fig. 1. Im Unterschied zu dieser Ausführungsform befindet sich der elektrische Leiter 7 nicht im Aufnahmeraum 6, sondern auf den Stegen 3 des Saugschlauches. Auch bei einer solchen Lage ist der elektrische Leiter 7 geschützt am Saugschlauch vorgesehen. Da der Leiter 7 von den U-förmigen Enden 5 überragt wird, ist der Leiter 7 optimal vor Beschädigung und/oder Verschleiß geschützt. Die Breite des elektrischen Leiters 7 ist kleiner als die Gangbreite des Wendelganges 8.

Bei der mehrgängigen Ausbildung (rechte Darstellung in Fig. 3) kann auf jedem Steg 3, 3' ein elektrischer Leiter 7 vorgesehen sein.

Der Leiter 7 kann aus jedem geeigneten Material bestehen. So kann er beispielsweise durch eine Rußschicht gebildet sein, die in bekannter Weise fest auf dem Steg 3 befestigt wird. Der Leiter 7 kann auch als selbstklebendes Band ausgebildet sein, das sich sehr einfach auf den Stegen 3 befestigen lässt. Auch ist es möglich, den Leiter 7 durch einen metallischen Draht zu bilden, der in geeigneter Weise auf dem Steg 3 befestigt wird.

Der Leiter 7 kann sich über die gesamte Breite des Steges 3 erstrecken. Der Leiter 7 hat nur eine geringe Dicke, so dass die Flexibilität des Saugschlauches nicht beeinträchtigt.

Da der Leiter 7 nicht im Aufnahmeraum 6 vorgesehen ist, können die beiden Enden 4, 5 so ausgebildet sein, dass im zusammengefügten Zustand zwischen dem Ende 4 und dem Bogen 11 des U-förmigen Endes 5 kein Aufnahmeraum mehr besteht.

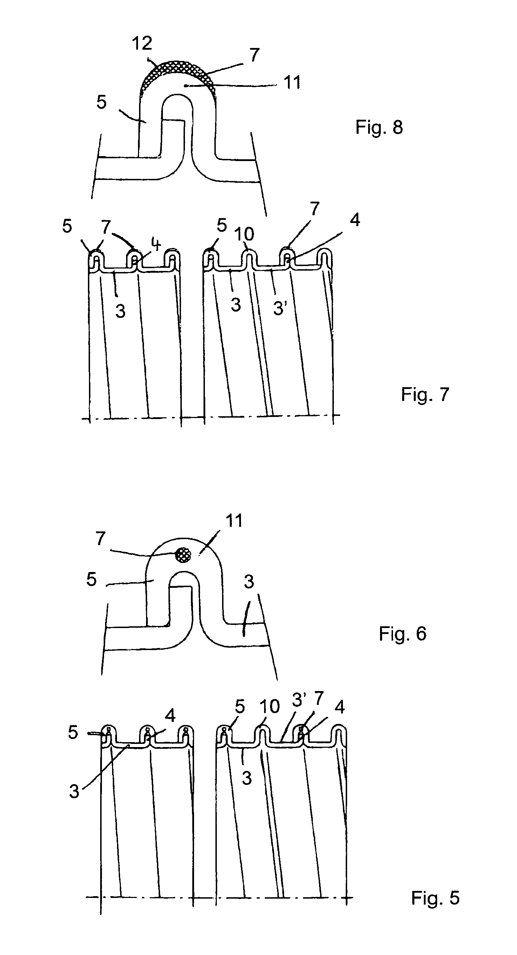

Die Fig. 5 und 6 zeigen die nicht zur Erfindung gehörende Möglichkeit, den Leiter 7 innerhalb der Materialdicke des Saugschlauches unterzubringen. In diesem Falle ist der Leiter 7 im Bogen 11 des U-förmigen Endes 5 angeordnet. Der Leiter 7 wird in diesem Falle durch einen elektrisch leitenden Draht gebildet, der beim Extrudiervorgang in den Kunststoff des Saugschlauches eingebettet wird. Auch auf diese Weise ist der Leiter 7 geschützt im Schlauch angeordnet und damit vor Beschädigung und/oder Verschleiß geschützt.

Der Bogenbereich 11 des Endes 5 kann verdickt ausgebildet sein, so dass der Leiter 7 zuverlässig eingebettet werden kann.

Es ist möglich, den als Draht ausgebildeten Leiter 7 auch an anderer Stelle innerhalb des Materials des Saugschlauches unterzubringen. Dabei kann der Bereich, in dem sich der Leiter 7 befindet, verdickt ausgebildet sein, um das Einbetten des Drahtes 7 in das Material des Schlauches zu erleichtern. Die Fig. 7 und 8 zeigen eine weitere, nicht zur Erfindung gehörende Möglichkeit, den Saugschlauch antistatisch zu gestalten. In diesem Falle ist der elektrische Leiter 7 auf den Saugschlauch aufgebracht, vorzugsweise auf die Außenseite des Bogenbereiches 11 des Endes 5. Der elektrische Leiter 7 besteht beispielsweise aus Polyethylen, in das Rußpartikel eingebettet sind. Diese elektrisch leitende Schicht lässt sich in einem Verfahrensschritt bei der Herstellung des Saugschlauches aufbringen. Besteht der Saugschlauch aus dem gleichen Kunststoff wie der Leiter 7, dann ergibt sich eine innige und sichere Verbindung zwischen dem Leiter 7 und dem Material des Schlauches.

Vorteilhaft ist es, wenn der Leiter 7 bei dieser Ausführungsform mit einer Abrieb/Verschleißschicht 12 abgedeckt ist.

Diese Schicht 7 kann auch auf den Steg 3 aufgebracht werden. Da die Stege 3 gegenüber den Enden 4, 5 vertieft liegen, ist eine zusätzliche Abdeck/Verschleißschicht 12 nicht erforderlich.

Bei der Ausführungsform gemäß Fig. 4 kann der elektrische Leiter 7 auch an der Innenseite des Saugschlauches vorgesehen sein.

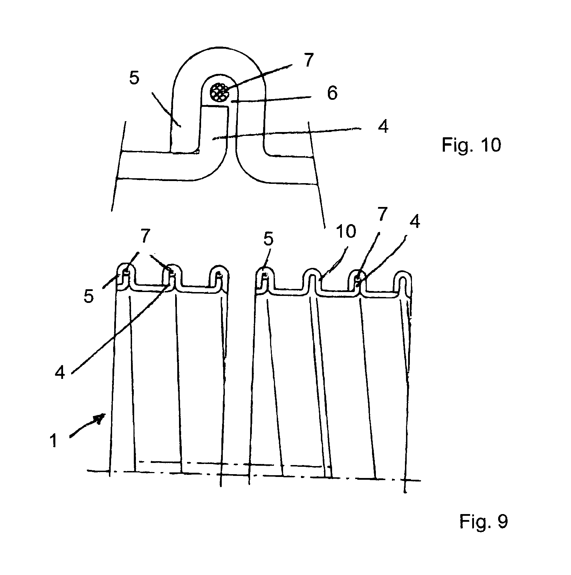

Die Fig. 9 und 10 zeigern eine nicht zur Erfindung gehörende Ausführungsform, bei der der elektrische Leiter 7 entsprechend dem Ausführungsbeispiel gemäß den Fig. 5 und 6 als elektrisch leitender Draht ausgebildet ist. Er ist im Aufnahmeraum 6 untergebracht.

Da der elektrische Leiter 7 nur noch in einem örtlich sehr schmalen Bereich des Saugschlauches vorgesehen ist, lässt er sich äußerst kostengünstig fertigen und anbieten. Der Saugschlauch selbst kann aus jedem geeigneten Kunststoff hergestellt werden, da zum Ableiten der elektrostatischen Aufladung der elektrische Leiter 7 vorgesehen ist.

Die beschriebenen Ausführungsbeispiele zeigen, dass der elektrische Leiter 7 auf unterschiedlichste Weise ausgebildet sein kann. Er kann auf der Außen- und/oder der Innenseite des Saugschlauches angeordnet oder in das Material des Saugschlauches eingebettet sein.

## Patentansprüche

1. Gewendelter Saugschlauch mit wenigstens einem elektrischen Leiter (7) zur Ableitung von elektrostatischer Ladung, der sich im Wesentlichen über die Wendellänge des Saugschlauches erstreckt und eine Breite hat, die höchstens gleich der Gangbreite des Saugschlauches ist,
**dadurch gekennzeichnet, dass** der Schlauch aus einem profilierten Schlauchabschnitt (1) gebildet wird, der einen im Querschnitt ebenen Steg (3) aufweist, dessen eines Ende (4) rechtwinklig nach außen gebogen ist und das andere Ende (5) des Schlauchabschnittes (1) ebenfalls nach außen gebogen ist und U-Form hat, wobei das eine Ende (4) in das U-förmige Ende (5) eingreift, das mediumsdicht mit dem anderen Ende (4) verbunden ist und dessen Querschnittsbreite im Wesentlichen der Dicke des anderen Endes (4) entspricht, und dass zwischen dem einen Ende (4) und einem Bogen (11) des U-förmigen Endes (5) ein Aufnahmeraum (6) gebildet ist, wobei auf dem Steg (3, 3') der elektrische Leiter (7) befestigt ist.

2. Saugschlauch nach Anspruch 1,
**dadurch gekennzeichnet, dass** das Mengenverhältnis von Material des Saugschlauches zum Material des elektrischen Leiters (7) kleiner ist als etwa 90 zu 10.

3. Saugschlauch nach Anspruch 1 oder 2,
**dadurch gekennzeichnet, dass** der elektrische Leiter (7) ein elektrisch leitendes Band ist.

4. Saugschlauch nach Anspruch 3,
**dadurch gekennzeichnet, dass** das elektrisch leitende Band (7) am Saugschlauch angeklebt ist.

5. Saugschlauch nach einem der Ansprüche 1 bis 4,
**dadurch gekennzeichnet, dass** der elektrische Leiter (7) durch eine Rußschicht gebildet ist.

6. Saugschlauch nach einem der Ansprüche 1 bis 4,
**dadurch gekennzeichnet, dass** der elektrische Leiter (7) durch elektrisch leitenden Kunststoff gebildet ist.

## Claims

1. A coiled vacuum hose with at least one electric conductor (7) for dissipating an electrostatic charge, the conductor extending essentially over the coil length of the vacuum hose and having a width which at most is equal to the width of the coil of the vacuum hose,
**characterised in that** the hose is formed of a profiled hose section (1) which comprises a web (3) planar in cross-section, one end (4) of which is bent outwards at right angles, and where the other end (5) of the hose section (1) is also bent outwards and comprises a U-shape, wherein the one end (4) engages into the U-shaped end (5), which is connected with the other end (4) in a medium-tight manner and the cross-sectional width of which essentially corresponds to the thickness of the other end (4) and **in that** a receiving space (6) is formed between the one end (4) and an arch (11) of the U-shaped end (5), wherein the electric conductor (7) is fastened on the web (3, 3').

2. The vacuum hose according to claim 1,
**characterised in that** the proportion of vacuum hose material to electric conductor (7) material is less than about 90 to 10.

3. The vacuum hose according to claim 1 or 2,
**characterised in that** the electric conductor (7) is an electrically conducting tape.

4. The vacuum hose according to claim 3,
**characterised in that** the electrically conducting tape (7) is glued to the vacuum hose.

5. The vacuum hose according to one of claims 1 to 4,
**characterised in that** the electric conductor (7) is formed of a layer of soot.

6. The vacuum hose according to one of claims 1 to 4,
**characterised in that** the electric conductor (7) is formed of an electrically conducting plastic.

## Revendications

1. Tuyau d'aspiration spiralé avec au moins un conducteur électrique (7) pour dérivation de charge électrostatique qui s'étend pour l'essentiel sur la longueur spiralée du tuyau d'aspiration et a une largeur qui est au maximum égale à la largeur de pas du tuyau d'aspiration,
**caractérisé en ce que** le tuyau est formé d'un tronçon de tuyau profilé (1) qui comporte une nervure plane (3) dans la section dont une extrémité (4) est pliée perpendiculairement vers l'extérieur et l'autre extrémité (5) du tronçon de tuyau (1) est également pliée vers l'extérieur et a une forme en U, pour lequel une extrémité (4) vient en prise dans l'extrémité en forme de U (5) qui est reliée étanche au milieu avec l'autre extrémité (4) et dont la largeur de section correspond pour l'essentiel à l'épaisseur de l'autre extrémité (4) et **en ce qu'**un espace de réception (6) est formé entre une extrémité (4) et un arc (11) de l'extrémité en forme de U (5), pour lequel le conducteur électrique (7) est fixé sur la nervure (3,3').

2. Tuyau d'aspiration selon la revendication 1,
**caractérisé en ce que** le rapport quantitatif entre le matériau du tuyau d'aspiration et le matériau du conducteur électrique (7) est inférieur à environ de 90 à 10.

3. Tuyau d'aspiration selon la revendication 1 ou 2,
**caractérisé en ce que** le conducteur électrique (7) est une bande électroconductrice.

4. Tuyau d'aspiration selon la revendication 3,
**caractérisé en ce que** la bande électroconductrice (7) est collée au tuyau d'aspiration.

5. Tuyau d'aspiration selon l'une quelconque des revendications 1 à 4,
**caractérisé en ce que** le conducteur électrique (7) est formé par une couche de suie.

6. Tuyau d'aspiration selon l'une quelconque des revendications 1 à 4,
**caractérisé en ce que** le conducteur électrique (7) est formé par une matière synthétique électroconductrice.
